(19) Europäisches Patentamt
European Patent Office
Office européen des brevets

(11) **EP 3 892 415 B1**

(12) **EUROPEAN PATENT SPECIFICATION**

(45) Date of publication and mention
of the grant of the patent:
**13.08.2025 Bulletin 2025/33**

(21) Application number: **19892199.1**

(22) Date of filing: **25.07.2019**

(51) International Patent Classification (IPC):
**B23K 26/348** *(2014.01)*    **B23K 9/02** *(2006.01)*
**B23K 9/16** *(2006.01)*    **B23K 26/242** *(2014.01)*
**B23K 103/04** *(2006.01)*    **B23K 103/10** *(2006.01)*
**B23K 103/12** *(2006.01)*    **B23K 103/14** *(2006.01)*

(52) Cooperative Patent Classification (CPC):
**B23K 26/244; B23K 26/242; B23K 26/348;**
B23K 2103/04; B23K 2103/05; B23K 2103/10;
B23K 2103/12; B23K 2103/14

(86) International application number:
**PCT/JP2019/029187**

(87) International publication number:
**WO 2020/115942 (11.06.2020 Gazette 2020/24)**

(54) **JOINING METHOD**

VERBINDUNGSVERFAHREN

PROCÉDÉ D'ASSEMBLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.12.2018 JP 2018226398**

(43) Date of publication of application:
**13.10.2021 Bulletin 2021/41**

(73) Proprietor: **Nippon Light Metal Company, Ltd.
Tokyo 105-0004 (JP)**

(72) Inventors:
• **YOSHIDA, Ryo**
**Shizuoka-shi, Shizuoka 421-3203 (JP)**
• **KANEKI, Hiroshi**
**Shizuoka-shi, Shizuoka 421-3203 (JP)**

(74) Representative: **Kiwit, Benedikt
Mitscherlich PartmbB
Patent- und Rechtsanwälte
Karlstraße 7
80333 München (DE)**

(56) References cited:
CN-A- 1 806 995    JP-A- 2002 066 774
JP-A- 2006 116 600    JP-A- 2006 281 279
JP-A- 2007 090 397    US-A1- 2006 278 618

EP 3 892 415 B1

## Description

TECHNICAL FIELD

The present invention relates to a joining method.

BACKGROUND ART

MIG welding, laser welding, hybrid welding, and the like have been known as methods of forming a lap joint by welding an inner corner portion formed by overlapping metal members. MIG welding has an advantage of a wider margin for the clearance at the welding portion and misalignment of the target position because the welding is performed with a filler material being supplied. On the other hand, MIG welding has disadvantages of a slow welding speed and a shallow penetration depth. In MIG welding, there is a disadvantage that when the welding speed is set high, a deposited metal (throat thickness) shortage occurs at the inner corner portion, decreasing the joint strength.

Laser welding has an advantage that the welding speed is faster than that in arc welding such as MIG welding. On the other hand, laser welding has a disadvantage that the margin for the clearance in the welded portion is significantly small because no filler material is added.

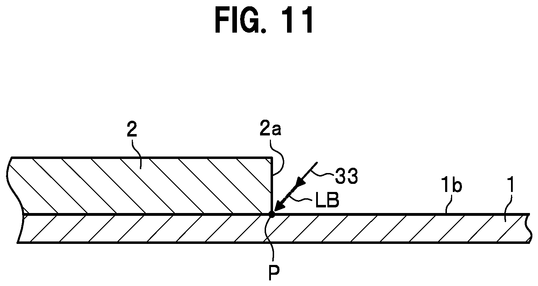

Document JP 2016 - 30289 A describes a hybrid welding using a hybrid welding machine including a preceding laser welding unit and a following MIG welding unit for welding . FIG. 11 is a schematic cross-sectional view illustrating conventional hybrid welding. In this hybrid welding, the inner corner portion formed by the front surface 1b of a first metal member 1 and an end surface 2a of a second metal member 2 is welded. In this hybrid welding, the target positions of a preceding laser beam LB and a following MIG arc 33 are both set to be at the corner portion P where the front surface 1b of the first metal member 1 and the end surface 2a of the second metal member 2 intersect with each other.

Document CN 1 806 995 A describes a method of big light spot laser and arc composite heat source for joining heterologous metals. A filler metal matched with the heterologous metal is used as solder of high-melting carbon steel / alloyed steel and as flux solder of low-melting nonferrous metal. A connecting piece heat input control is realized by adjusting laser power and adopting large scale laser light spot, at the one side of low-melting nonferrous metal forming fusion welding connect, and at one side of high-melting carbon steel and alloyed steel forming self-brazing connect.

Document JP 2006 116600 A describes a dissimilar material joining method for obtaining a composite structure of an aluminum-based material and an iron-based material used as various structural materials for automobiles. An overlapping joint is formed with an aluminum plate (upper plate) and a steel plate (underneath plate) having an aluminum coating layer on the surface. A laser beam is irradiated to an overlapping part located on the upper surface of the aluminum plate at their edge parts for joining the plates.

Document JP 2006 281279 A describes a method for joining a different material using laser welding. An overlapping joint is formed by overlapping an end portion of an aluminum plate to a steel plate having a zinc coating layer on the surface. A laser beam from a preceding first heat source is irradiated to a surface of a steel plate vicinity of the overlapping joint. A molten portion is formed by melting the coating layer coating the surface of the steel plate. Then, a molten portion is formed by melting the aluminum plate by providing a second heat source to the aluminum plate, thereby a joining joint is obtained.

US 2006/278618 A1 discloses a joining method according to the preamble of claim 1.

SUMMARY OF INVENTION

Problem to be solved

The above-described hybrid welding provides welding compensating the disadvantages of the laser welding and the MIG welding. However, hybrid welding still has a problem that when the welding speed is set high, the phenomenon of a deposited metal (throat thickness) shortage still occurs at the inner corner portion, decreasing the joint strength of the lap joint and robustness for allowing a clearance and misalignment of the target position. In these days, a weld length is increased along with an increase in the size of a welding target, and therefore an increase in the welding speed and an improvement in the robustness are required.

In view of the above, an object of the present invention is to provide a joining method that achieves an increase of the welding speed and also improve the robustness for allowing the clearance between metal members and misalignment of the welding target position.

Solution to Problem

To solve the above problems, the present invention includes: an overlapping step of overlapping a first metal member and a second metal member such that a front surface of the first metal member is opposed to a back surface of the second metal member; and a welding step of performing a laser welding and a MIG welding by using a hybrid welding machine including a preceding laser welding unit for a preceding welding and a following MIG welding unit for a following welding, in which laser welding is performed by emitting a laser beam onto a front surface of the second metal member, MIG welding is performed on an inner corner portion formed by the front surface of the first metal member and an end surface of the second metal member, and the welding step includes setting a target position for the laser beam from the laser welding unit such in a way that the target position is located against the second metal member relative to a target position for a MIG arc by the MIG welding unit.

According to the joining method, by emitting the laser beam onto the front surface of the second metal member, a part of the second metal member melted by the preceding laser beam serves as deposited metal for the following MIG welding, and thus it is possible to increase the amount of the deposited metal (throat thickness) at the inner corner portion. Therefore, it achieves both an increase in the welding speed and an improvement in the joint strength. Additionally, with the amount of the deposited metal (throat thickness) increased, it improves the robustness for allowing the clearance between the metal members and misalignment of the welding target position.

In the welding step, a rotation angle, when viewed from above, between a reference line parallel to a direction of movement of the hybrid welding machine and an imaginary line connecting distal ends of the laser welding unit and the MIG welding unit, is set to 20° to 70°. In the welding step, it is preferable that a distance between the target position of the preceding laser beam and the target position of the following MIG arc is set to 2 to 5 mm. In the welding step, it is preferable that a target angle of the MIG arc is set to 40° to 80°. In the welding step, it is preferable that an angle of advance of the MIG arc is set to 5° to 50°. In the overlapping step, it is preferable that a clearance between the front surface of the first metal member and the back surface of the second metal member is set to 0 to 1.0 mm. In the welding step, it is preferable that the laser beam is emitted perpendicularly to the front surface of the second metal member.

Advantageous Effects of Invention

The joining method according to the present invention increases the welding speed and improves the robustness for allowing the clearance between metal members and misalignment of the welding target position.

BRIEF DESCRIPTION OF DRAWINGS

FIG. 1 is a perspective view of a overlapping step of a joining method according to an embodiment of the present invention.

FIG. 2 is a side view of a welding step of the joining method according to the embodiment.

FIG. 3 is a front view of the welding step of the joining method according to the embodiment.

FIG. 4 is a plan view of the welding step of the joining method according to the embodiment.

FIG. 5 is a schematic side view of the welding step of the joining method according to the embodiment.

FIG. 6A is a cross-sectional view of a target position of a laser beam in the welding step of the joining method according to the embodiment.

FIG. 6B is a cross-sectional view of a target position of a MIG arc in the welding step of the joining method according to the embodiment.

FIG. 6C is a cross-sectional view of a state after the welding step of the joining method according to the embodiment.

FIG. 7 is a table of welding conditions for a strength test.

FIG. 8 is a table of target setting for the strength test.

FIG. 9 is a result table of the joint strengths and joint efficiencies of comparative examples according to the strength test.

FIG. 10 is a result table of the joint strengths and joint efficiencies of examples according to the strength test.

FIG. 11 is a schematic cross-sectional view diagram of conventional hybrid welding.

DETAILED DESCRIPTION OF THE INVENTION

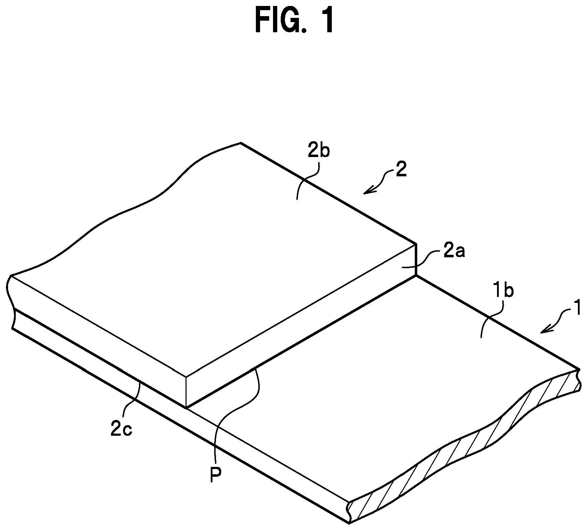

A joining method according to an embodiment of the present invention is described in detail with reference to drawings. As illustrated in FIG. 1, in the joining method according to this embodiment, a second metal member 2 is overlapped on a first metal member 1, and then the first metal member 1 and the second metal member 2 are joined with each other by welding to form a lap joint. In the joining method according to this embodiment, an overlapping step and a welding step are performed. Note that, a "front surface" in the specification means a surface on the opposite side of a "back surface".

As illustrated in FIG. 1, the overlapping step is a step of overlapping the second metal member 2 on the first metal member 1. The first metal member 1 and the second metal member 2 may have any shape; in this embodiment, both have a plate shape. The first metal member 1 and the second metal member 2 are properly selected from weldable metals such as aluminum, aluminum alloys, copper, copper alloys, titanium, titanium alloys, iron steels, and stainless steels.

In the overlapping step, the first metal member 1 and the second metal member 2 are overlapped such that the front surface 1b of the first metal member 1 is opposed to the back surface 2c of the second metal member 2. The front surface 1b of the first metal member 1 and an end surface 2a of the second metal member 2 form an inner corner portion. A point at which the front surface 1b of the first metal member 1 and the end surface 2a of the second metal member 2 intersect with each other is called a corner portion P.

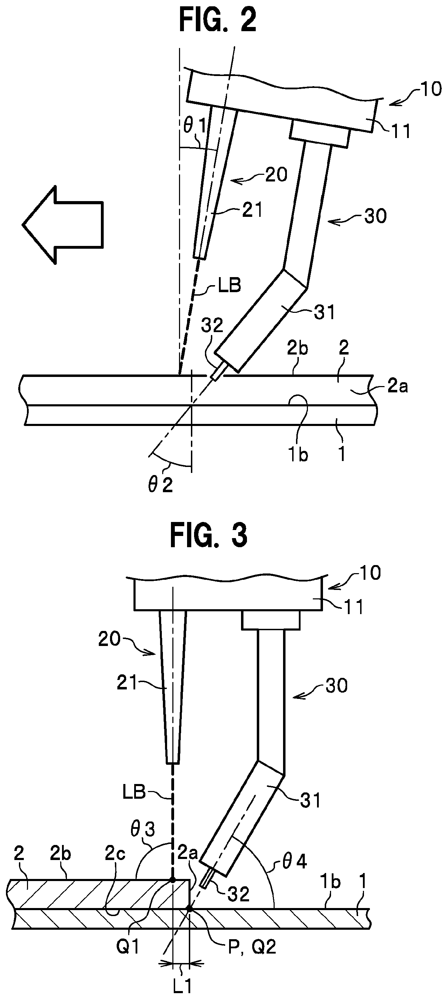

The welding step is a step of welding the inner corner portion by using a hybrid welding machine 10 as illustrated in FIGs. 2 to 5. In FIGs. 2, 4, and 5, the hybrid welding machine 10 is moved from the right side to the left side. In FIG. 3, the hybrid welding machine 10 is moved from the far side to the near side. The hybrid welding machine 10 includes a connecting portion 11, a laser welding unit 20, and a MIG welding unit 30. The connecting portion 11 is, for example, attached to a distal end of an arm robot. The laser welding unit 20 includes a laser head 21 and is formed on one end of the connecting portion 11. The laser head 21 emits a laser beam LB.

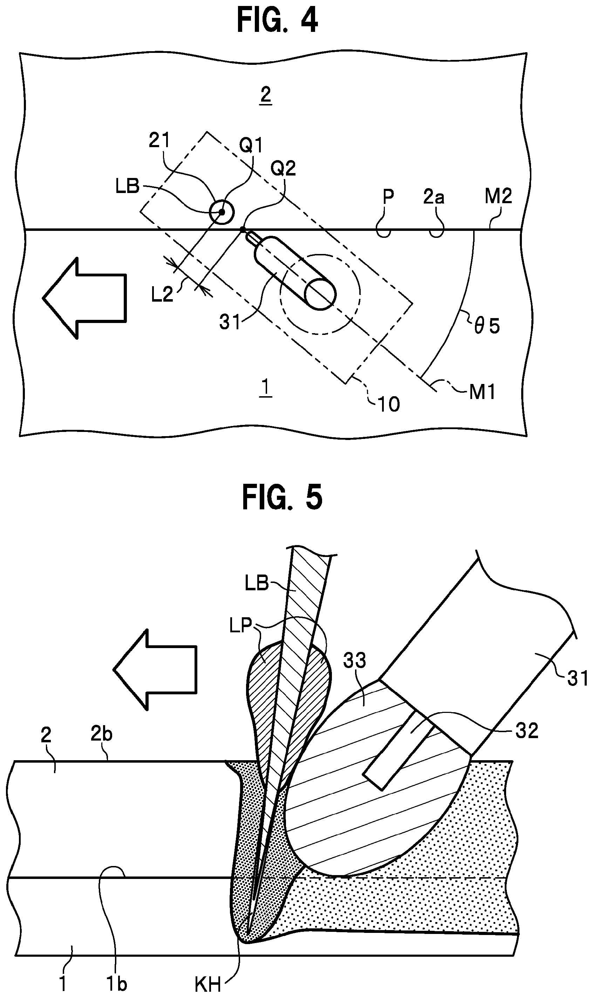

The MIG welding unit 30 includes an arc torch 31 and is placed on the other end of the connecting portion 11. The arc torch 31 supplies a filler material 32 and also generates a MIG arc 33 (see FIG. 5) at its distal end.

As illustrated in FIG. 2, the angle of advance $\theta 1$ of a shaft portion of the laser head 21 is set to 10°, for example. The angle of advance is the tilt angle of the shaft portion of the laser head 21 with respect to the vertical axis when the hybrid welding machine 10 is viewed from the side. The angle of advance $\theta 1$ may be set properly between -10° to 10° with respect to the vertical axis. As illustrated in FIG. 3, the target angle $\theta 3$ of the shaft portion of the laser head 21 is set to 90°, for example. That is, the laser beam LB is emitted perpendicularly to the front surface 2b of the second metal member 2. The target angle $\theta 3$ is the opening angle from the front surface 2b of the second metal member 2 to the shaft portion of the laser head 21. The target angle $\theta 3$ may be set properly between 70° to 110°.

As illustrated in FIG. 3, the target position Q1 of the laser beam LB emitted from the laser head 21 is set to the position 2.0 mm away from the end surface 2a in this embodiment. The target position Q1 may be properly set according to the plate thickness of the second metal member 2. For example, it may be set within a range of $0 < L1 \leq 5.0$ (mm), where L1 is the distance from the end surface 2a of the second metal member 2 to the target position Q1. The target position Q1 is set on the front surface 2b of the second metal member 2 and placed closer to the center of the surface of the second metal member 2 (placed away from the end surface 2a) relative to the target position Q2 of the MIG arc 33 described later.

As illustrated in FIG. 2, the angle of advance $\theta 2$ of a shaft portion of the arc torch 31 is set to 40°, for example. The angle of advance $\theta 2$ may be set properly between 30° to 50°. As illustrated in FIG. 3, the target angle $\theta 4$ of the shaft portion of the arc torch 31 is set to 70°, for example. The target angle $\theta 4$ is the opening angle from the front surface 1b of the first metal member 1 to the shaft portion of the arc torch 31. The target angle $\theta 4$ may be set properly within a range of 50 to 80°. The target position Q2 of the MIG arc 33 (see FIG. 5) generated from the arc torch 31 is set to be at the corner portion P.

As illustrated in FIG. 4, when the hybrid welding machine 10 is viewed from above, the opening angle (rotation angle $\theta 5$) between the imaginary line M1 connecting the distal end of the laser head 21 and the distal end of the arc torch 31 and a reference line M2 parallel to the direction of the movement of the hybrid welding machine 10 is set to 40°, for example. In this embodiment, the reference line M2 is the same as the in-plane direction of the end surface 2a of the second metal member 2. The rotation angle $\theta 5$ may be set properly between 30° to 50°. The distance L2 from the target position Q1 of the laser beam LB to the target position Q2 of the MIG arc 33 on the imaginary line M1 is set to about 3.0 mm. The distance L2 may be set properly within a range of $1.0 < L2 \leq 5.0$ (mm).

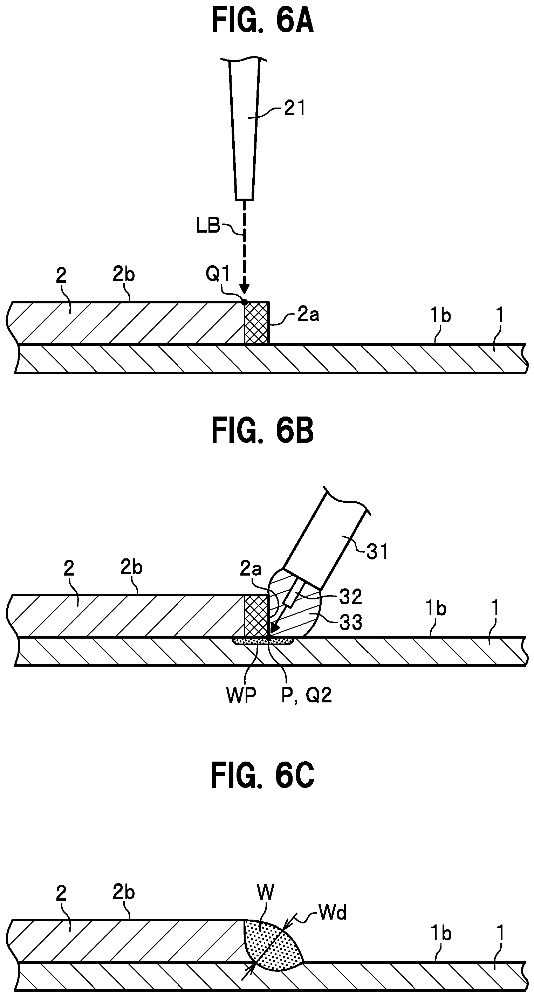

In the welding step, laser welding is performed by the laser beam LB emitted from the preceding laser head 21 as illustrated in FIG. 6A. The target position Q1 of the laser beam LB is set to a position away from the end surface 2a of the second metal member 2, and an end portion of the second metal member 2 is melted substantially parallel to the end surface 2a. For this process, it is preferable to set the output of the laser beam LB to a degree that allows a keyhole KH formed by the laser welding to be formed in the first metal member 1 as illustrated in FIG. 5. With this, the end portion of the second metal member 2 is cut and melted by the laser beam LB.

In the welding step, MIG welding is performed by the arc torch 31 following the laser head 21 as illustrated in FIG. 6B. The target position Q2 of the arc torch 31 is set to overlap the corner portion P. As also illustrated in FIG. 5, the following MIG arc 33 is guided to a cathode spot (laser-induced plasma LP generated around the distal end of the laser beam LB) generated by the laser welding. A weld pool WP formed by the MIG arc 33 is fused with the end portion of the second metal member 2 melted (cut) by the laser beam LB, and a weld metal W is formed at the inner corner portion as illustrated in FIG. 6C.

Note that, although the output of the laser beam LB is set as described above in the welding step, the output of the laser beam LB may be set to a depth at which the end portion of the second metal member 2 is not completely cut.

According to conventional hybrid welding, the target position of the laser beam LB and the target position of the MIG arc 33 are both at the corner portion P as illustrated in FIG. 11. This method has a disadvantage that the deposited metal becomes small when the welding speed is increased. Additionally, since the deposited metal becomes small, there is a problem of low robustness for allowing a clearance between the metal members and misalignment of the welding target position.

In contrast, in the joining method according to this embodiment, the laser beam LB is emitted to the front surface 2b from above the second metal member 2, and thereby a part of the second metal member 2 melted by the preceding laser beam LB serves as a deposited metal of the following MIG welding. Thus, it is possible to increase the amount of the deposited metal in the inner corner portion (throat thickness Wd: see FIG. 6C) in combination with the filler material 32. Therefore, the welding speed increases as well as the joint strength improves. Additionally, with the increase in the amount of the deposited metal, it is possible to improve the robustness for allowing a clearance between the metal members and misalignment of the welding target position.

Moreover, according to the invention, the rotation angle of the reference line M2 that is parallel to the direction of movement of the hybrid welding machine 10 and the imaginary line M1 connecting the distal ends of the laser welding unit 20 and the MIG welding unit 30 is set to 20° to 70°, when viewed from above. Furthermore, like the welding step in this embodiment, it is preferable to set the distance L2 between the target position Q1 of the preceding laser beam LB and the target position Q2 of the following MIG arc 33 to 2 to 5 mm. If the distance L2 is shorter than 2 mm, the distance between the laser head 21 and the arc torch 31 is too close, and it is difficult to make proper joining. If the distance L2 exceeds 5 mm, the cathode spot of the laser welding does not induce the MIG arc 33, which results in that the deposited beads (deposited metal W) may meander.

Additionally, in the overlapping step, it is preferable to set a clearance between the front surface 1b of the first metal member 1 and the back surface 2c of the second metal member 2 to 0 to 1.0 mm. If the clearance exceeds 1.0 mm, there is a possibility of a decrease in the joining strength. Moreover, in the welding step, it is preferable to set the target angle θ4 of the MIG arc 33 to 40° to 80°. Furthermore, in the above-described welding step, it is preferable to set the angle of advance θ2 of the MIG arc 33 to 5° to 50°.

Examples

Next, examples according to this embodiment are described. Here, the first metal member 1 was joined with the second metal member 2 by using the hybrid welding machine 10 to form a lap joint, and a tensile test was conducted for the lap joint. The first metal member 1 of an aluminum alloy A5052-H34 with a thickness of t = 2.0 mm was used for both a group of comparative examples and a group of examples. The second metal member 2 of an aluminum alloy A6061-T6 with a thickness of t = 3.0 mm was used for both the group of comparative examples and the group of examples.

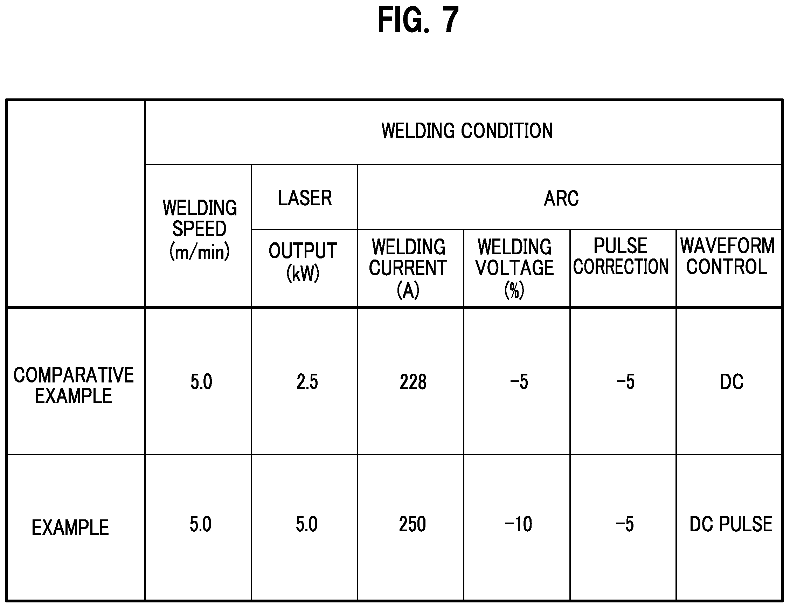

As indicated in FIG. 7, the welding speeds were set to 5.0 (m/min) in the comparative examples and the examples. The laser outputs were set to 2.5 (kW) in the comparative examples and set to 5.0 (kW) in the examples. A welding currents of the MIG arc were set to 228 (A) in the comparative examples and set to 250 (A) in the examples. Other conditions were as indicated in FIG. 7.

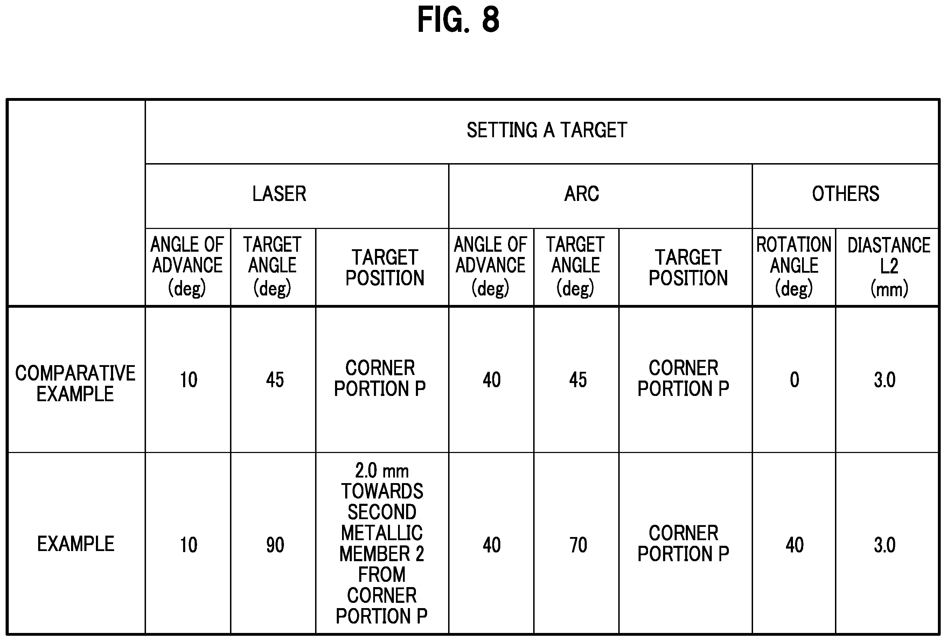

As indicated in FIG. 8, the angles of advance θ1 of the laser head 21 were set to 10° for both the group of comparative examples and the group of examples, and the angles of advance θ2 of the arc torch 31 were set to 40° for both sets. The target angles of the laser head 21 in the comparative examples were set to 45°, and the target angles θ3 of the laser head 21 in the examples were set to 90°. The target angles of the MIG arc 33 in the comparative examples were set to 45°.

In the comparative examples, the target positions Q1 of the laser beam LB and the target positions Q2 of the MIG arc 33 were both set to be at the corner portion P of the inner corner portion. The distances L2 in the comparative examples were set to 3.0 mm.

Unlike the above setting, the target positions Q1 of the laser beams LB in the examples were set to three kinds of positions: a position 2.0 mm away from the end surface 2a of the second metal member 2 which is used as a reference position (offset distance 0 mm), a position -0.5 mm which is placed toward the end surface 2a from the reference (offset distance -0.5 mm), and a position +0.5 mm which is placed away from the end surface 2a (offset distance 0.5 mm). The target positions Q2 of the MIG arc 33 in the examples were set to be at the corner portion P of the inner corner portion. The rotation angles θ5 in the examples were set to 40°, and the distances L2 therein were set to 3.0 mm.

Additionally, the clearances between the first metal member 1 and the second metal member 2 in both the group of comparative examples and the group of examples were set to three kinds, 0 mm, 0.5 mm, and 1.0 mm, for each of the above-described offset distances. Consequently, Nos. 1 to 9 test specimens were obtained as the comparative examples, and Nos. 10 to 18 test specimens were obtained as the examples.

For both the group of comparative examples and the group of examples, a tensile test was performed on each specimen, and the joint efficiency (%) was calculated according to the following formula (1). Joint efficiencies having over 70% were regarded as "favorable" results.

[Formula. 1]

$$\text{Joint efficiency (\%)} = \frac{F_J}{F_{BM} \cdot t \cdot w / w} \times 100 \qquad \text{Formula (1)}$$

$F_J$: the tensile shear strength (N/mm) of the joint
$F_{BM}$: the lower-limit strength (N/mm$^2$) in the JIS standard of the second metal member 2 (thin-plate side base material)
t: the plate thickness (mm) of the second metal member 2 (thin-plate side base material)
w: the width (mm) of the tensile test specimen

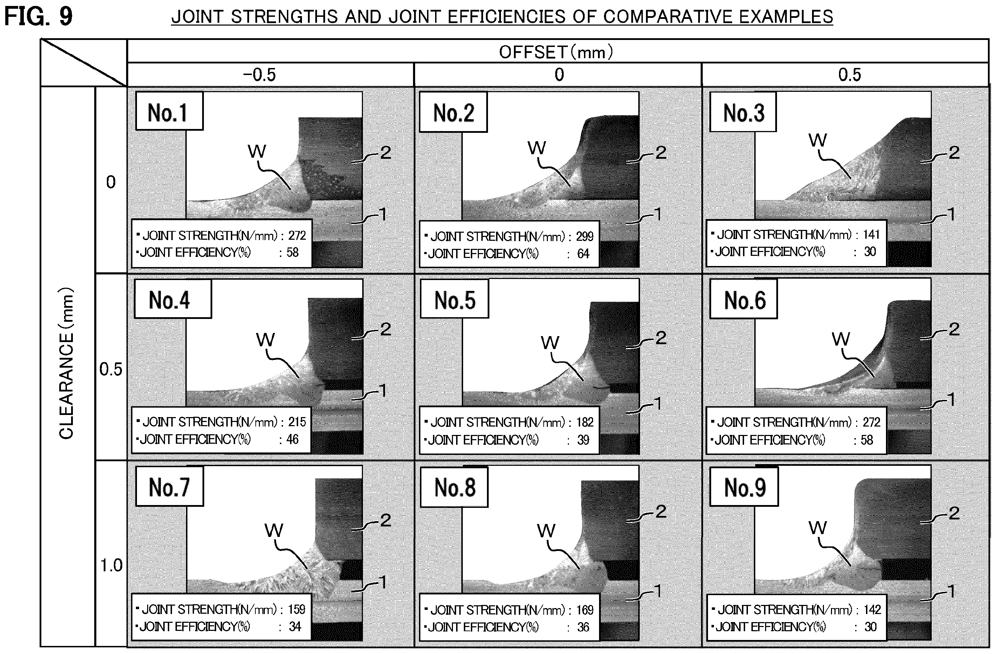

As indicated in FIG. 9, the largest joint strength in the comparative examples was 299 (N/mm) exhibited by NO. 2, and the joint efficiencies were all below 70%. Also, the deposited metal W was thin and dented toward the inner corner portion.

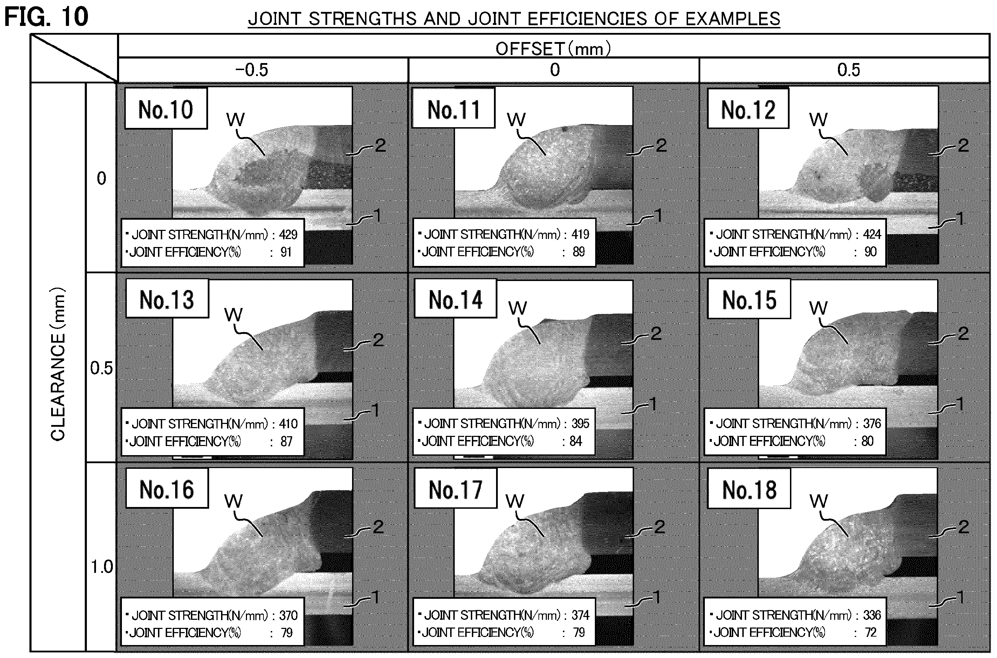

In contrast, as indicated in FIG. 10, the joint strengths in the examples were 336 to 429 (N/mm), and the joint efficiencies were all over 70%. Also, the deposited metal W was formed to have a great throat thickness and to be convex in the direction away from the inner corner portion. The average cross-section area of the deposited metals W of the examples was about three times greater than the average cross-section area of the deposited metals W of the comparative examples.

It was found that the joint strengths and the joint efficiencies in the examples are high even if the clearances between the front surface 2b of the first metal member 1 and the back surface 2c of the second metal member 2 are 0 to 1.0 mm. Additionally, it was found that the joint strengths and the joint efficiencies in the examples are high even if the positions of the laser beam LB are shifted from the target position by ±0.5 mm. That is to say, according to the examples, a thickness of the deposited metal W became large even under a situation of a fast welding speed, resulting in improvement of the robustness for allowing a clearance between metal members and misalignment of the welding target position.

It was also found that, according to the examples, the smaller the clearances between the front surface 1b of the first metal member 1 and the back surface 2c of the second metal member 2 are, the higher both the joint strengths and the joint efficiencies are.

Reference Signs List

1 first metal member
2 second metal member
10 hybrid welding machine
20 laser welding unit
21 laser head
30 MIG welding unit
31 arc torch
32 filler material
33 MIG arc
LB laser beam
W weld metal
θ1 angle of advance of laser head
θ2 angle of advance of arc torch
θ3 target angle of laser head
θ4 target angle of arc torch
θ5 rotation angle

**Claims**

1. A joining method comprising:

an overlapping step configured to overlap a first metal member (1) and a second metal member (2) with each other such that a front surface (1b) of the first metal member (1) is opposed to a back surface (2c) of the second metal member (2); and
a welding step configured to perform a laser welding and a MIG welding by using a hybrid welding machine (10) including a laser welding unit (20) for a preceding welding and a MIG welding unit (30) for a following welding,

**characterized in that**

the welding step includes:

performing the laser welding by emitting a laser beam (LB) onto a front surface (2b) of the second metal member (2);
performing the MIG welding on an inner corner portion formed by the front surface (1b) of the first metal member (1) and an end surface (2a) of the second metal member (2);
setting a target position (Q1) for the laser beam (LB) from the laser welding unit (20) such in a way that the target position (Q1) is located against the second metal member (2) relative to a target position (Q2) for a MIG arc (33) by the MIG welding unit (30);
setting a reference line (M2) parallel to a direction in which the hybrid welding machine (10) moves;
setting an imaginary line (M1) connecting a distal end of the laser welding unit (20) and a distal end of the MIG welding unit (30); and
setting a rotation angle θ5 between the reference line (M2) and the imaginary line (M1) to 20° to 70° in a view from above.

2. A joining method according to claim 1, wherein
the welding step includes setting a distance (L2) between the target position (Q1) for the laser beam (LB) for the preceding welding and the target position (Q2) for the MIG arc (33) for the following welding to 2 to 5 mm.

3. A joining method according to any one of the preceding claims, wherein the welding step includes setting a target angle θ4 of the MIG arc, which is the opening angle from the front surface (1b) of the first metal member (1) to the shaft portion of the arc torch (31), to 40° to 80°.

4. A joining method according to any one of the preceding claims, wherein the welding step includes setting an angle of advance θ2 of the MIG arc, which is the tilt angle of the shaft portion of the arc torch (31) with respect to the vertical axis when the hybrid welding machine (10) is viewed from the side, to 5° to 50°.

5. A joining method according to any one of the preceding claims, wherein the overlapping step includes setting a clearance between the front surface (1b) of the first metal member (1) and the back surface (2c) of the second metal member (2) to 0 to 1.0 mm.

6. A joining method according to any one of the preceding claims, wherein the welding step includes emitting the laser beam (LB) perpendicularly onto the front surface (2b) of the second metal member (2).

**Patentansprüche**

1. Ein Verbindungsverfahren, aufweisend:

einen Überlappungsschritt, der so ausgestaltet ist, dass ein erstes Metallelement (1) und ein zweites Metallelement (2) einander so überlappen, dass eine vordere Fläche (1b) des ersten Metallelements (1) einer hinteren Fläche (2c) des zweiten Metallelements (2) gegenüberliegt; und
einen Schweißschritt, der so ausgestaltet ist, dass er ein Laserschweißen und ein MIG-Schweißen durchführt, unter Verwendung eines Hybridschweißgerätes (10), welches eine Laserschweißeinheit (20) für ein Vorabschweißen und eine MIG-Schweißeinheit (30) für ein nachfolgendes Schweißen aufweist,
**dadurch gekennzeichnet, dass**
der Schweißschritt beinhaltet:

Durchführen des Laserschweißens durch Emittieren eines Laserstrahls (LB) auf eine vordere Fläche (2b) des zweiten Metallelements (2);
Durchführen des MIG-Schweißens an einem inneren Eckabschnitt, der durch die vordere Fläche (1b) des ersten Metallelements (1) und eine Endfläche (2a) des zweiten Metallelements (2) gebildet wird;
Einstellen einer Zielposition (Q1) für den Laserstrahl (LB) der Laserschweißeinheit (20) derart, dass sich die Zielposition (Q1) relativ zu einer Zielposition (Q2) für einen MIG-Lichtbogen (33) durch die MIG-Schweißeinheit (30) an dem zweiten Metallelement (2) befindet;
Einstellen einer Referenzlinie (M2) parallel zu einer Richtung, in der sich das Hybridschweißgerät (10) bewegt;
Einstellen einer imaginären Linie (M1), die ein distales Ende der Laserschweißeinheit (20) und ein distales Ende der MIG-Schweißeinheit (30) verbindet; und

Einstellen eines Drehwinkels θ5 zwischen der Referenzlinie (M2) und der imaginären Linie (M1) von oben gesehen auf 20° bis 70°.

2. Ein Verbindungsverfahren nach Anspruch 1, wobei der Schweißschritt das Einstellen eines Abstands (L2) zwischen der Zielposition (Q1) für den Laserstrahl (LB) für das Vorabschweißen und der Zielposition (Q2) für den MIG-Lichtbogen (33) für das nachfolgende Schweißen auf 2 bis 5 mm beinhaltet.

3. Ein Verbindungsverfahren nach einem der vorherigen Ansprüche, wobei der Schweißschritt das Einstellen eines den Öffnungswinkel von der vorderen Oberfläche (1b) des ersten Metallelements (1) zum Schaftabschnitt des Lichtbogenbrenners (31) darstellenden Zielwinkels θ4 des MIG-Lichtbogens auf 40° bis 80° beinhaltet.

4. Ein Verbindungsverfahren nach einem der vorherigen Ansprüche, wobei der Schweißschritt das Einstellen eines den Neigungswinkel des Schaftteils des Lichtbogenbrenners (31) in Bezug auf die vertikale Achse darstellenden Vorschubwinkels θ2 des MIG-Lichtbogens auf 5° bis 50° beinhaltet, bei seitlicher Betrachtung des Hybridschweißgerätes (10).

5. Ein Verbindungsverfahren nach einem der vorherigen Ansprüche, wobei der Überlappungsschritt das Einstellen eines Abstandes zwischen der vorderen Fläche (1b) des ersten Metallelements (1) und der hinteren Fläche (2c) des zweiten Metallelements (2) auf 0 bis 1,0 mm beinhaltet.

6. Ein Verbindungsverfahren nach einem der vorherigen Ansprüche, wobei der Schweißschritt das Emittieren des Laserstrahls (LB) senkrecht auf die vordere Fläche (2b) des zweiten Metallelements (2) beinhaltet.

## Revendications

1. Procédé d'assemblage comportant :

une étape de superposition configurée pour superposer un premier organe métallique (1) et un deuxième organe métallique (2) l'un avec l'autre de sorte qu'une surface avant (1b) du premier organe métallique (1) soit opposée à une surface arrière (2c) du deuxième organe métallique (2) ; et
une étape de soudage configurée pour réaliser un soudage laser et un soudage MIG en utilisant une machine de soudage hybride (10) incluant une unité de soudage laser (20) pour un soudage précédent et une unité de soudage MIG (30) pour un soudage suivant, **caractérisé en ce que**
l'étape de soudage inclut :

la réalisation du soudage laser par l'émission d'un faisceau laser (LB) sur une surface avant (2b) du deuxième organe métallique (2) ;
la réalisation du soudage MIG sur une portion de coin interne formée par la surface avant (1b) du premier organe métallique (1) et une surface d'extrémité (2a) du deuxième organe métallique (2) ;
l'établissement d'une position cible (Q1) pour le faisceau laser (LB) provenant de l'unité de soudage laser (20) d'une manière telle que la position cible (Q1) soit située contre le deuxième organe métallique (2) par rapport à une position cible (Q2) pour un arc MIG (33) par l'unité de soudage MIG (30) ;
l'établissement d'une ligne de référence (M2) parallèle à une direction dans laquelle la machine de soudage hybride (10) se déplace ;
l'établissement d'une ligne imaginaire (M1) reliant une extrémité distale de l'unité de soudage laser (20) et une extrémité distale de l'unité de soudage MIG (30) ; et
l'établissement d'un angle de rotation θ5 entre la ligne de référence (M2) et la ligne imaginaire (M1) sur 20° à 70° dans une vue de dessus.

2. Procédé d'assemblage selon la revendication 1, dans lequel
l'étape de soudage inclut l'établissement d'une distance (L2) entre la position cible (Q1) pour le faisceau laser (LB) pour le soudage précédent et la position cible (Q2) pour l'arc MIG (33) pour le soudage suivant sur 2 à 5 mm.

3. Procédé d'assemblage selon l'une quelconque des revendications précédentes, dans lequel l'étape de soudage inclut l'établissement d'un angle cible θ4 de l'arc MIG, qui est l'angle d'ouverture allant de la surface avant (1b) du premier organe métallique (1) à la portion de tige de la torche à arc (31), sur 40° à 80°.

4. Procédé d'assemblage selon l'une quelconque des revendications précédentes, dans lequel l'étape de soudage inclut l'établissement d'un angle d'avance $\theta 2$ de l'arc MIG, qui est l'angle d'inclinaison de la portion de tige de la torche à arc (31) par rapport à l'axe vertical lorsque la machine de soudage hybride (10) est vue de profil, sur 5° à 50°.

5. Procédé d'assemblage selon l'une quelconque des revendications précédentes, dans lequel l'étape de superposition inclut l'établissement d'un jeu entre la surface avant (1b) du premier organe métallique (1) et la surface arrière (2c) du deuxième organe métallique (2) sur 0 à 1,0 mm.

6. Procédé d'assemblage selon l'une quelconque des revendications précédentes, dans lequel l'étape de soudage inclut l'émission du faisceau laser (LB) perpendiculairement sur la surface avant (2b) du deuxième organe métallique (2).

# FIG. 1

# FIG. 2

# FIG. 3

# FIG. 4

# FIG. 5

## FIG. 6A

## FIG. 6B

## FIG. 6C

# FIG. 7

| | WELDING CONDITION | | | | | |
| | WELDING SPEED (m/min) | LASER | ARC | | | |
| | | OUTPUT (kW) | WELDING CURRENT (A) | WELDING VOLTAGE (%) | PULSE CORRECTION | WAVEFORM CONTROL |
| COMPARATIVE EXAMPLE | 5.0 | 2.5 | 228 | −5 | −5 | DC |
| EXAMPLE | 5.0 | 5.0 | 250 | −10 | −5 | DC PULSE |

# FIG. 8

| | SETTING A TARGET | | | | | | | |
| | LASER | | | ARC | | | OTHERS | |
| | ANGLE OF ADVANCE (deg) | TARGET ANGLE (deg) | TARGET POSITION | ANGLE OF ADVANCE (deg) | TARGET ANGLE (deg) | TARGET POSITION | ROTATION ANGLE (deg) | DIASTANCE L2 (mm) |
|---|---|---|---|---|---|---|---|---|
| COMPARATIVE EXAMPLE | 10 | 45 | CORNER PORTION P | 40 | 45 | CORNER PORTION P | 0 | 3.0 |
| EXAMPLE | 10 | 90 | 2.0 mm TOWARDS SECOND METALLIC MEMBER 2 FROM CORNER PORTION P | 40 | 70 | CORNER PORTION P | 40 | 3.0 |

EP 3 892 415 B1

**FIG. 9**   JOINT STRENGTHS AND JOINT EFFICIENCIES OF COMPARATIVE EXAMPLES

| | | OFFSET (mm) | | |
|---|---|---|---|---|
| | | −0.5 | 0 | 0.5 |
| CLEARANCE (mm) | 0 | **No.1** W 2 1 · JOINT STRENGTH(N/mm) : 272 · JOINT EFFICIENCY(%) : 58 | **No.2** W 2 1 · JOINT STRENGTH(N/mm) : 299 · JOINT EFFICIENCY(%) : 64 | **No.3** W 2 1 · JOINT STRENGTH(N/mm) : 141 · JOINT EFFICIENCY(%) : 30 |
| | 0.5 | **No.4** W 2 1 · JOINT STRENGTH(N/mm) : 215 · JOINT EFFICIENCY(%) : 46 | **No.5** W 2 1 · JOINT STRENGTH(N/mm) : 182 · JOINT EFFICIENCY(%) : 39 | **No.6** W 2 1 · JOINT STRENGTH(N/mm) : 272 · JOINT EFFICIENCY(%) : 58 |
| | 1.0 | **No.7** W 2 1 · JOINT STRENGTH(N/mm) : 159 · JOINT EFFICIENCY(%) : 34 | **No.8** W 2 1 · JOINT STRENGTH(N/mm) : 169 · JOINT EFFICIENCY(%) : 36 | **No.9** W 2 1 · JOINT STRENGTH(N/mm) : 142 · JOINT EFFICIENCY(%) : 30 |

EP 3 892 415 B1

**FIG. 10**

| CLEARANCE (mm) | OFFSET (mm) | | |
|---|---|---|---|
| | −0.5 | 0 | 0.5 |
| 0 | No.10 W 2 1 · JOINT STRENGTH(N/mm) : 429 · JOINT EFFICIENCY(%) : 91 | No.11 W 2 1 · JOINT STRENGTH(N/mm) : 419 · JOINT EFFICIENCY(%) : 89 | No.12 W 2 1 · JOINT STRENGTH(N/mm) : 424 · JOINT EFFICIENCY(%) : 90 |
| 0.5 | No.13 W 2 1 · JOINT STRENGTH(N/mm) : 410 · JOINT EFFICIENCY(%) : 87 | No.14 W 2 1 · JOINT STRENGTH(N/mm) : 395 · JOINT EFFICIENCY(%) : 84 | No.15 W 2 1 · JOINT STRENGTH(N/mm) : 376 · JOINT EFFICIENCY(%) : 80 |
| 1.0 | No.16 W 2 1 · JOINT STRENGTH(N/mm) : 370 · JOINT EFFICIENCY(%) : 79 | No.17 W 2 1 · JOINT STRENGTH(N/mm) : 374 · JOINT EFFICIENCY(%) : 79 | No.18 W 2 1 · JOINT STRENGTH(N/mm) : 336 · JOINT EFFICIENCY(%) : 72 |

EP 3 892 415 B1

# FIG. 11

**EP 3 892 415 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016030289 A
- CN 1806995 A
- JP 2006116600 A
- JP 2006281279 A
- US 2006278618 A1